# EUROPEAN PATENT SPECIFICATION

(11) **EP 0 595 442 B1**
(45) Date of publication and mention of the grant of the patent: **23.04.1997**
(21) Application number: 93250270.1
(22) Date of filing: 05.10.1993
(51) Int. Cl.: B32B 27/30, B32B 27/32, B65D 30/02, B65D 65/40

(54) **An easy to open package**
Leicht zu öffnende Verpackung
Emballage qui peut être ouvert facilement

(30) Priority: 21.10.1992 DE 4236162
(43) Date of publication of application: 04.05.1994
(73) Proprietor: W.R. Grace & Co.-Conn., New York, New York 10036 (US)
(72) Inventor: Freschi, Claudio, I-20060 Cassina De'Pecchi (Mi) (IT); Colnaghi, Renato, I-20010 Pogliano Mil. (MI) (IT); Bianchi, Guiseppe, I-20017 Rho (Mi) (IT)
(74) Representative: UEXKÜLL & STOLBERG

(56) References cited:
- US-A- 4 859 514
- US-A- 5 023 121

## Description

The invention relates to an easy to open package wherein an article is sealed between upper and lower thermoplastic webs. More specifically the invention is directed to a package which is tightly sealed and will not be easily destroyed by the usual handling during shipment and storage but which may be easily opened by manually peeling apart the upper from the lower web of the package.

A wide variety of products, especially food products like meat, sausages and cheese are being offered in visually attractive packages made from two thermoplastic webs using the thermoforming process, the vaccum skin packaging process or other methods. The lower web is usually heated and deepdrawn to the desired shape, thus forming a receptacle for the article to be packaged.

In the thermoforming process the upper web is drawn over the article by vacuum and is sealed to the peripheral flange-like edges of the lower web or support using heated sealing bars or sealing platens, usually in the form of a sealing frame.

In the vacuum skin packaging method the upper web is heated, molded down upon and around the product and against the support, the space between the heated upper film and the support having been evacuated. The upper heated film thus forms a tight skin around the product and is sealed to the support by differential air pressure (atmospheric pressure outside versus vacuum inside of the package).

With these processes the problem is encountered that the upper film is sealed so strongly to the support that it is difficult to separate the two webs and to open the package. An easy to open package comprising two thermoplastic webs safely sealed together should be easily openable when manually pulling apart the two webs, normally starting from a point like a corner of the package where the upper web has not been sealed to the support or where the lower web is provided with a cut. In this manner the use of scissors, a knife or other devices to open the package can be avoided.

A solution to this problem has been provided in Proprietor's EP-B-192 131 describing an easy to open package with a seal layer comprising
i) an ionomer having a melt flow index of less than 5, and
ii) a modified ethylene/vinylacetate copolymer having a substantially higher melt flow index whereby the melt flow indices of the two polymers in the seal layer differ by at least 10.

When applying this concept to packages made by the vacuum skin packaging process, very satisfactory seals are obtained. However, further solutions of this problem would be very useful in order to provide other alternatives.

The seal layer on the bottom web is also subjected to a thermal treatment prior to the sealing operation when the lower web is heated and deepdrawn during the packaging process which heat treatment may change the properties of the seal layer on the lower or bottom web.

The vacuum skin packaging method requires as top web an irradiated multi-layer film in order to have satisfactory temperature stability and heat shrinkability properties. This means that the seal layer on the top web will also be subjected to the irradiation and it is therefore necessary to find a combination of seal layers in which
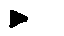 the seal layer on the lower web will not be adversely affected by heating,
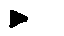 the seal layer on the top web will not be adversely affected by either heating or irradiation, and
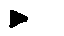 the finished seal will have satisfactory heat resistance, seal strength, and good ageing properties and will yet provide the desired easy open feature upon peeling.

US-A-5,023,121 discloses a coextruded film with peelable sealant for use in a thermoforming process in which a perimeter seal is applied by a descending seal platen (column 4, lines 30/31). By this thermoforming process an easily opened package is obtained from
a) a first web including a sealant layer comprising a blend of polybutene and polypropylene and a third polymeric material selected from the group comprising
   i) ethylene vinylacetate copolymer
   ii) low density polyethylene
   iii) linear low density polyethylene and
   iv) ionomer resin, and
b) a second web with a sealant layer consisting of a polymer selected from the group consisting of ethylene/vinylacetate copolymer, low density polyethylene, linear low density polyethylene, ionomer, and mixtures thereof,
c) an additional layer bonded to the sealant layer of the first web comprising a polymeric adhesive.

In the case of the use of an ionomer as a blending material in the sealant layers, it is necessary to employ it in both sealant layers in order to provide a good peelable seal in the final package (col. 8, lines 22 to 26).

It has now surprisingly been found that in a vacuum skin packaging process employing dome temperatures up to 200°C a seal with the above mentioned desired properties including the easy to open feature can be obtained if the seal layers on the lower and upper web, respectively, are very carefully selected while other seal layer combinations taught by the prior art will not give a satisfactory result.

According to the invention an easy to open package which is resistent to thermal treatment is obtained by vacuum skin packaging wherein an article is sealed between a lower and an upper thermoplastic web, said package comprising
a) a lower web having a first seal layer on its contact surface, and
b) an upper web of an irradiated multi-layer film having a second seal layer on its contact surface,
whereby
i) the first seal layer comprises a mixture of ethylene/vinylacetate copolymer, polybutene and polypropylene,
ii) the second seal layer is selected from the group comprising an ionomer resin and high density polyethylene.

Preferably the first seal layer on the lower web is a mixture of 25% by weight of polybutene and polypropylene and of 75% by weight of ethylene/vinylacetate copolymer. A particularly preferred sealant comprises a mixture of polybutene and polypropylene in a weight ratio of 4:1. The ethylene/vinylacetate copolymer in the first sealant has preferably a vinyl acetate content of 10 to 20% by weight. Sealants of this type have already been disclosed in US-A-4 665 130 and US-A-4 666 778 (according to which they are sealed to themselves) and are also described in the above mentioned US-A-5 023 121.

Suitable ionomeric resins for the second seal layer on the irradiated top web are acid-modified polyethylene with an acid content of up to 10% by weight and a high degree of ion linking (Zn). Such polymers are commercially available under the tradename SURLYN® (DuPont). Alternatively high density polyethylene having a density of 0.93 g/cm³ or higher may also be employed as second seal layer.

The total thickness of the seal layer is advantageously in the range of about 5 to 15 µm although thicker layers may also be used in view of the fact that the present seal layers exhibit adhesive failure upon peeling whereas according to the prior art (EP-B-192 131) a relatively thin seal layer is preferred since this will result in a rather smooth breakage due to cohesive failure parallel to the seal layer plane. In this latter case a thicker layer may allow the breakage to occur in different zones or planes of the seal layer so that lose strips and rough surfaces are formed. According to the present invention the first and the second seal layer, respectively, will normally have a thickness between about 2 and 13 µm.

It is important to achieve a good adhesion between the sealant layers and the upper and lower web of the package. Accordingly the innermost layer of the two webs (i.e. their contact surfaces) should be such that they provide good adhesion to the respective sealant layer.

The following examples and comparative examples show that the selection of the sealant layers is critical for the success of the invention. An easy to open seal with constant peel force, low sensitivity to the forming temperature and good resistance to thermal after-treatment (pasteurization) is only obtained if the three component sealant mixture is applied to the bottom web and either an ionomer resin or HDPE are employed as sealant for the irradiated multi-layer top web. The same effect is not obtained if the three-component sealant is used as sealant for the top web or as sealant for both the top and the bottom webs, as suggested by the prior art for packages made by thermoforming (US-A-5,023,121).

The following examples serve to further illustrate the invention.

In order to have identical conditions for the comparison of the behavior of the seal layers, all other structural characteristics and process parameters were held identical or constant, respectively.

The packages were made by the vacuum skin packaging process using a CRYOVAC® VS 44 machine (W.R. Grace & Co.-Conn.). The machine conditions were as follows:
Dome temperature 200°C
Forming station temperature 85°C
Tray depth 5 mm
Seal pressure max. 1 bar

A similar performance is expected to be achieved in all machines not equipped with a sealing frame like the MULTIVAC® CD 6000, CD 5600, CD 4000, 1/15 system. The bottom web consisted of a semi-rigid polyvinyl chloride sheet (200 µm thick) with a layer (9 µm) of the sealant to be tested on its contact surface.

As the top web a flexible coextruded multi-layer film was used which consisted of the following layers:
LDPE (40 µm)
Adhesive (3 µm)
EVOH (8 µm)
Adhesive (3 µm)
LDPE (40 µm)
Sealant layer to be tested (6 µm).

All top films were exposed to E-beam irradiation at a dose of 120 kGy (12 Mrad).

The peel tests were run on an ACQUATI® dynamometer at a testing speed of 80 cm/min. A constant peel strength of 250 to 900 g/25 mm is rated "good" whereas lower or higher values, respectively, are rated "not acceptable".

The following sealant compositions were tested:
- EVA/PB/PP blend -: 75% EVA (12% VA content), 20% polybutene, 5% polypropylene
- Ionomer -: Zinc partial salt of Ethylene/methacrylic acid copolymer, MFI 14
- HDPE -: High density Polyethylene, MFI 7, density 0,96 g/cm³
- LDPE -: Low density polyethylene, MFI 12, density 0,915 g/cm³
- VLDPE -: Very low density polyethylene, MFI 7, density 0,91 g/cm³
- EVA -: ethylene/vinylacetate copolymer (VA content 5% or 9%), MFI 2,9, density 0,926 to 0,929 g/cm³
- EAA -: Ethylene/acrylic acid copolymer (9,5 % AA), MFI 1,5

The results obtained when using the above sealant layer compositions on either the bottom or the top web are summarized in the following Table 1.

**Table 1**

| Bottom Web | Top Web | Seal strength (g/25 mm) | Easy Openability |
|---|---|---|---|
| EVA/PB/PP | EVA/PB/PP | > 1800 | Not acceptable (too strong) |
| | IONOMER | 500 - 850 | Good |
| | LDPE | >1500 | Not acceptable (too strong) |
| | VLDPE | 1000 - 1500 | Not acceptable (too strong) |
| | HDPE | 500 - 900 | Good |
| EVA (5% VA) | EVA/PB/PP | > 1500 | Not acceptable (too strong) |
| EVA (9% VA) | EVA/PB/PP | > 2000 | Not acceptable (too strong) |
| VLDPE | EVA/PB/PP | > 1500 | Not acceptable (too strong) |
| IONOMER | EVA/PB/PP | 40 - 100 | Not acceptable (too weak) |
| EAA | EVA/PB/PE | 40 - 80 | Not acceptable (too weak) |

It will be noted that only the combinations according to the present invention give a seal of the desired easy openability whereas all other seals are either too weak or too strong.

Heat seal layers of the present invention are not influenced by heat treatment of the final package at temperatures normally utilized for pasteurization (+100°C) according to the enclosed table.

| **Effect of Heat Treatment on Skin Seal of EVA/PB/PP blend** | | | |
|---|---|---|---|
| Top Sealant | Skin Temp. (°C) | Heat Treatment | Skin Seal (g/inch) |
| Ionomer | 200 | None | 480-850 |
| Ionomer | 200 | 100°C, 30 min | 470-940 |
| HDPE | 200 | None | 500-900 |
| HDPE | 200 | 100°C, 30 min | 640-900 |

## Claims

1. An easy to open package obtained by vacuum skin packaging wherein an article is sealed between a lower and an upper thermoplastic web which package is resistent to thermal treatment, said package comprising
a) a lower web having a first seal layer on its contact surface, and
b) an upper web of an irradiated multi-layer film having a second seal layer on its contact surface,
**characterized in that**
i) the first seal layer is a layer comprising a mixture of ethylene/vinylacetate copolymer, polybutene and polypropylene,
ii) the second seal layer is selected from the group comprising an ionomer resin and high density polyethylene.

2. An easy to open package according to claim 1**, characterized in that** the first seal layer is a mixture of 25% by weight of polybutene and polypropylene and of 75% by weight of ethylene/vinylacetate copolymer.

3. An easy to open package according to claims 1 or 2, **characterized in that** the first seal layer comprises polybutene and polypropylene in a weight ratio of 4:1.

4. An easy to open package according to anyone of claims 1 to 3, **characterized in that** the ethylene/vinylacetate copolymer has a vinyl acetate content of 10 to 20% by weight.

5. A method of making an easy to open package which package is resistent to thermal treatment, wherein an article is sealed between a lower and an upper thermoplastic web by vacuum skin packaging, said method comprising use of
a) a lower web having a first seal layer on its contact surface, and
b) an upper web of an irradiated multi-layer film having a second seal layer on its contact surface,
**characterized in that**
i) as the first seal layer there is used a layer comprising a mixture of ethylene/vinylacetate copolymer, polybutene and polypropylene, and
ii) the second seal layer is selected from the group comprising an ionomer resin and high density polyethylene or mixtures thereof.

6. A method of making an easy to open package according to claim 5, wherein the first seal layer is a mixture of 25% by weight of polybutene and polypropylene and of 75% by weight of ethylene/vinylacetate copolymer.

7. A method of making an easy to open package according to claims 6 or 7, wherein the first seal layer comprises polybutene and polypropylene in a weight ratio of 4:1.

8. A method of making an easy to open package according to claims 6 to 8, wherein the ethylene/vinylacetate copolymer has a vinyl acetate content of 10 to 20% by weight.

## Patentansprüche

1. Leicht zu öffnende, durch Vakuumschutzhüllenverpackung erhaltene Verpackung, bei der ein Gegenstand zwischen einer unteren und einer oberen thermoplastischen Bahn versiegelt ist, wobei die Verpackung gegenüber thermischer Behandlung beständig ist und
a) eine untere Bahn mit einer ersten Siegelschicht auf ihrer Kontaktoberfläche und
b) eine obere Bahn aus einer bestrahlten Mehrschichtfolie mit einer zweiten Siegelschicht auf ihrer Kontaktoberfläche umfaßt,
**dadurch gekennzeichnet**, daß
i) die erste Siegelschicht eine Schicht ist, die eine Mischung aus Ethylen/Vinylacetat-Copolymer, Polybuten und Polypropylen umfaßt, und
ii) die zweite Siegelschicht ausgewählt ist aus der Gruppe bestehend aus einem Ionomerharz und Polyethylen hoher Dichte.

2. Leicht zu öffnende Verpackung nach Anspruch 1, **dadurch gekennzeichnet**, daß die erste Siegelschicht eine Mischung aus 25 Gew.-% Polybuten und Polypropylen und 75 Gew.-% Ethylen/Vinylacetat-Copolymer ist.

3. Leicht zu öffnende Verpackung nach Anspruch 1 oder 2, **dadurch gekennzeichnet**, daß die erste Siegelschicht Polybuten und Polypropylen in einem Gewichtsverhältnis von 4:1 umfaßt.

4. Leicht zu öffnende Verpackung nach einem der Ansprüche 1 bis 3, **dadurch gekennzeichnet**, daß das Ethylen/Vinylacetat-Copolymer einen Vinylacetatgehalt von 10 bis 20 Gew.-% aufweist.

5. Verfahren zur Herstellung einer leicht zu öffnenden Verpackung, die gegenüber thermischer Behandlung beständig ist, bei dem ein Gegenstand zwischen einer unteren und einer oberen thermoplastischen Bahn durch Vakuumschutzhüllenverpackung versiegelt wird und das die Verwendung von
a) einer unteren Bahn mit einer ersten Siegelschicht auf ihrer Kontaktoberfläche und
b) einer oberen Bahn aus einer bestrahlten Mehrschichtfolie mit einer zweiten Siegelschicht auf ihrer Kontaktoberfläche umfaßt,
**dadurch gekennzeichnet**, daß
i) als erste Siegelschicht eine Schicht verwendet wird, die eine Mischung aus Ethylen/Vinylacetat-Copolymer, Polybuten und Polypropylen umfaßt, und
ii) die zweite Siegelschicht ausgewählt ist aus der Gruppe bestehend aus einem Ionomerharz und Polyethylen hoher Dichte.

6. Verfahren zur Herstellung einer leicht zu öffnenden Verpackung nach Anspruch 5, bei dem die erste Siegelschicht eine Mischung aus 25 Gew.-% Polybuten und Polypropylen und 75 Gew.-% Ethylen/Vinylacetat-Copolymer ist.

7. Verfahren zur Herstellung einer leicht zu öffnenden Verpackung nach den Ansprüchen 6 oder 7, bei dem die erste Siegelschicht Polybuten und Polypropylen in einem Gewichtsverhältnis von 4:1 umfaßt.

8. Verfahren zur Herstellung einer leicht zu öffnenden Verpackung nach den Ansprüchen 6 bis 8, bei dem das Ethylen/Vinylacetat-Copolymer einen Vinylacetatgehalt von 10 bis 20 Gew.-% aufweist.

## Revendications

1. Emballage facile à ouvrir obtenu par emballage d'une peau sous vide où un article est scellé entre une bande thermoplastique inférieure et une bande thermoplastique supérieure lequel emballage est résistant à un traitement thermique, ledit emballage comprenant
a) une bande inférieure ayant une première couche de scellement sur sa surface de contact, et
b) une bande supérieure d'un film multicouche irradié ayant une seconde couche de scellement sur sa surface de contact,
**caractérisé en ce que**
i) la première couche de scellement est une couche comprenant un mélange d'un copolymère d'éthylène/acétate de vinyle, de polybutylène et de polypropylène,
ii) la seconde couche de scellement est choisie dans le groupe comprenant une résine ionomère et un polyéthylène haute densité.

2. Emballage facile à ouvrir selon la revendication 1, **caractérisé en ce que** la première couche de scellement est un mélange de 25% en poids de polybutylène et de polypropylène et de 75% en poids de copolymère d'éthylène/acétate de vinyle.

3. Emballage facile à ouvrir selon les revendications 1 ou 2, **caractérisé en ce que** la première couche de scellement comprend du polybutylène et du polypropylène à un rapport en poids de 4:1.

4. Emballage facile à ouvrir selon l'une quelconque des revendications 1 à 3, **caractérisé en ce que** le copolymère d'éthylène/acétate de vinyle a une teneur en acétate de vinyle de 10 à 20% en poids.

5. Méthode de fabrication d'un emballage facile à ouvrir, lequel emballage est résistant à un traitement thermique, où un article est scellé entre une bande thermoplastique inférieure et une bande thermoplastique supérieure par emballage d'une peau sous vide, ladite méthode comprenant l'utilisation de
a) une bande inférieure ayant une première couche de scellement sur sa surface de contact, et
b) une bande supérieure d'un film multicouche irradié ayant une seconde couche de scellement sur sa surface de contact,
**caractérisée en ce que**
i) on utilise en tant que première couche de scellement une couche comprenant un mélange d'un copolymère d'éthylène/acétate de vinyle, de polybutylène et de propylène, et
ii) la seconde couche de scellement est choisie dans le groupe comprenant une résine ionomère et un polyéthylène haute densité ou des mélanges de ceux-ci.

6. Méthode de fabrication d'un emballage facile à ouvrir selon la revendication 5, où la première couche de scellement est un mélange de 25% en poids de polybutylène et de polypropylène et de 75% en poids de copolymère d'éthylène/acétate de vinyle.

7. Méthode de fabrication d'un emballage facile à ouvrir selon les revendications 6 ou 7, dans laquelle la première couche de scellement comprend du polybutylène et du polypropylène à un rapport en poids de 4:1.

8. Méthode de fabrication d'un emballage facile à ouvrir selon les revendications 6 à 8, dans laquelle le copolymère d'éthylène/acétate de vinyle a une teneur en acétate de vinyle de 10 à 20% en poids.
